# EUROPEAN PATENT SPECIFICATION

(11) **EP 1 048 864 B1**
(45) Date of publication and mention of the grant of the patent: **05.01.2005**
(21) Application number: 00106479.9
(22) Date of filing: 25.03.2000
(51) Int. Cl.: F16D 3/84

(54) **A boot for a constant velocity universal joint**
Schutzmanschette für ein Gleichlaufgelenk
Soufflet de protection pour joint homocinétique

(30) Priority: 30.04.1999 US 303791
(43) Date of publication of application: 02.11.2000
(73) Proprietor: GKN Automotive Inc., Auburn Hills, MI 48326-2362 (US)
(72) Inventor: Johnson, Rory Matthew, 48439 Michigan (US)
(74) Representative: Neumann, Ernst Dieter, Dipl.-Ing.

(56) References cited:
- EP-A- 0 702 173
- EP-A- 0 915 264
- GB-A- 2 296 946
- GB-A- 2 323 641

## Description

### Technical Field

This invention relates to a boot for a universal joint and more specifically to a rolling diaphragm boot for a constant velocity universal joint, see for example GB-A-2 323 641.

### Background Art

Constant velocity universal joints are sometimes used in vehicles for coupling the transmission and its corresponding propeller shaft. In four-wheel drive vehicles, constant velocity universal joints are utilized to couple the transfer case to the front and rear propeller shafts extending therefrom to corresponding front and rear drive axles. A constant velocity universal joint used in these applications includes a boot which is crimped into a larger boot-can connector, which in turn is affixed to the outer race of the constant velocity universal joint. A rolling diaphragm boot is typically used in this application.

A rolling diaphragm boot is commonly formed of a rubber or silicone material which is soft enough that a boot of such material is compressible when crimped into the boot-can connector. However, during the operative life of a vehicle, the crimping integrity between the rolling diaphragm of the boot formed of soft material and its mating boot-can connector of a constant velocity universal joint may deteriorate. This may particularly be the case during operation in and exposure of the constant velocity universal joint to temperature extremes.

Consequently, the need has developed for an improved design for a constant velocity universal joint which includes an improved rolling diaphragm boot and a mating boot-can having an enhanced crimping integrity, and also having improved properties allowing the boot and the crimping integrity to have improved long-term durability and temperature endurance.

### Summary Of The Invention

It is a principal object according to the present invention to provide an improved constant velocity universal joint having a rolling diaphragm boot and boot-can.

It is another object according to the present invention to provide a constant velocity universal joint having a rolling diaphragm boot and boot-can with improved crimping integrity therebetween.

It is yet another object according to the present invention to provide a rolling diaphragm boot which has improved hot and cold temperature operating performance and durability properties.

It is still another object according to the present invention to provide a constant velocity universal joint and propeller shaft assembly according to the present invention which incorporates the improved rolling diaphragm boot design provided herein.

It is yet still another object according to the present invention to provide a rolling diaphragm boot of an improved design and material selection to prevent crimping deterioration and slippage of the boot and the crimping integrity between the boot and the boot can.

According to the present invention, therefore, an improved constant velocity universal joint is provided having a boot formed of a thermoplastic elastomer and having a rolling diaphragm shape. The boot has a large diameter crimping lip with material removed therefrom in order to enhance the integrity of the clamping between the boot and the boot-can by reducing the effective stiffness of the boot material.

In carrying out the above objects, features and advantages of the present invention, provided is a boot adapted for coupling to a boot-can connector, the boot being an annular member which has a longitudinal axis and a crimping lip. The crimping lip is received by the boot-can connector and has a plurality of radially distributed apertures which are oriented parallel to the longitudinal axis. The apertures reduce the stiffness and increase the compressibility of the crimping lip. In one preferred embodiment, the plurality of radially distributed apertures of the boot include a plurality of radially distributed holes. And in another preferred embodiment, the plurality of radially distributed apertures of the boot include a plurality of radially distributed cut-outs. For each preferred embodiment, the annular member is preferably formed of a thermoplastic material.

In another embodiment according to the present invention, provided is a boot and boot-can assembly which is adapted for attachment to a housing. The assembly includes a boot-can connector which has a first end for mating with the housing. The boot-can connector also has a second flanged end. Further included is a boot formed of a thermoplastic elastomer material. The boot has an annular lip which is received by the second flanged end of the boot-can connector. The annular lip has a plurality of radially distributed apertures for reducing the stiffness and increasing the compressibility of the annular lip.

In keeping with the present invention, a constant velocity universal joint is provided which has an annular outer race. The constant velocity universal joint includes a boot-can which has a first end for mating with the annular outer race and a second flanged end. The constant velocity universal joint also includes a thermoplastic rolling-diaphragm boot which has an crimping lip which is received by the second end of the boot-can. The crimping lip also includes a plurality of radially distributed apertures which serve to increase the compressibility of the crimping lip.

Further provided in accordance with the present invention is a constant velocity universal joint and propeller shaft assembly. This assembly includes a propeller shaft having a first end. Also included in this assembly is a constant velocity universal joint which receives the first end of the propeller shaft therein. The constant velocity universal joint also has an annular outer race having a first face. Also included is a boot-can which has a large-diameter end and a relatively small-diameter flanged end. The large-diameter end mates with the first face of the outer race. Further included is a thermoplastic boot which has a sealing end, a tubular stem portion for receiving the propeller shaft, and an annular upturned edge which is crimpingly affixed to the relatively small-diameter flanged end of the boot-can. The annular upturned edge has a plurality of radially distributed apertures for increasing the compressibility of the annular upturned edge. The sealing end cooperates with the propeller shaft to provide a seal therewith.

The above objects and other objects, features and advantages of the present invention are readily apparent from the following detailed description of the best mode for carrying out the invention when taken in connection with the accompanying drawings.

### Brief Description Of The Drawings

FIGURE 1 is a cross-sectional side view of a constant velocity universal joint and propeller shaft assembly according to the present invention;
FIGURE 2 is a perspective view of a boot and boot-can assembly according to the present invention;
FIGURE 3a is a side view of the boot and boot-can assembly illustrated in Figure 2;
FIGURE 3b is a front view of the boot and boot-can assembly illustrated in Figure 3a;
FIGURE 4a is a cross-sectional side view of the boot and boot-can assembly shown in Figure 3a, in an un-crimped state, taken along the line A-A;
FIGURE 4b is an enlarged detail of the encircled portion from Figure 4a, showing the crimping lip of the boot received within the boot can in an un-crimped state;
FIGURE 5a is a cross-sectional side view of the boot and boot-can assembly shown in Figure 3a, in a crimped state, taken along the line A-A;
FIGURE 5b is an enlarged detail of the encircled portion from Figure 5a, showing the crimping lip of the boot received within the boot can in an crimped state;
FIGURE 6a is a perspective view of a first embodiment of a boot according to the present invention;
FIGURE 6b is a front view of the first embodiment of the boot shown in Figure 6a;
FIGURE 6c is a cross sectional view of the first embodiment of the boot, taken along the line 6c-6c of Figure 6b;
FIGURE 7a is a perspective view of a second embodiment of a boot according to the present invention;
FIGURE 7b is a front view of the second embodiment of the boot shown in Figure 7a; and .
FIGURE 7c is a cross-sectional view of the second embodiment of the boot, taken along the line 7c-7c of Figure 7b.

### Best Mode For Carrying Out The Invention

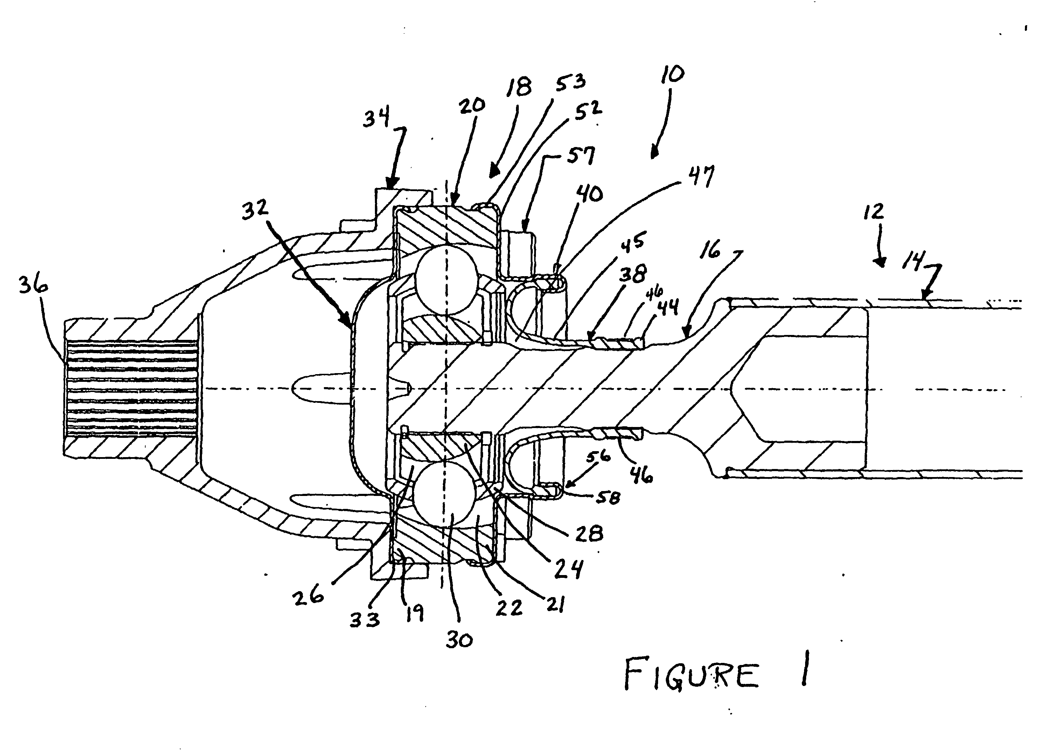

In accordance with the teachings of the present invention, Figure 1 of the drawings shows a cross-sectional side view of a constant velocity universal joint and propeller shaft assembly 10 according to the present invention. As shown in Figure 1, assembly 10 includes a propeller shaft 12, which in the embodiment illustrated includes a propeller shaft housing tube 14 which has a propeller stub shaft 16 aligned and coupled therewith and projecting therefrom. As is known in the art, the propeller shaft 12 is a drive shaft connecting the transmission (not shown) to the driving axle (or front and rear axles in a four-wheel drive vehicle) in order to transmit torque from the transmission to the axle.

Further included in assembly 10 is a constant velocity universal joint 18, which includes an outer race 20 having outer tracks 22, and an inner race 24 having inner tracks 26. Constant velocity universal joint 18 is of the ball-and-cage variety. Note that constant velocity joint 18 includes a cage 28 which has a plurality of windows therein, each for holding and carrying a corresponding one of a plurality of ball bearings 30. Ball bearings 30 are directed by the cage while riding on the outer and inner tracks 22 and 26, respectively, of joint 18.

Assembly 10 further includes a grease cap 32 therein. Grease cap 32 is mounted to one end of constant velocity universal joint 18 for retaining grease contained within joint 18 for keeping it lubricated and also for keeping any foreign matter and contaminants out of joint 18. As illustrated in Figure 1, grease cap 32 has an annular flange 33 which is secured to a first end 19 of outer race 20. Grease cap 32 may also have a means for venting in order to minimize pressure fluctuations due to expansion and contraction of enclosed air space during operation of the constant velocity universal joint 38. The means for venting is generally a hole in the center dome of grease cap 32. Also illustrated is an adaptor member 34 mounted to the first end 19 of outer race 20 disposed around grease cap 32. Adaptor member 34 includes a splined bore 36 distal the constant velocity universal joint 18. Splined bore 36 serves to couple propeller shaft 12 and constant velocity universal joint 18 to another vehicle component, such as a transmission or transfer case (not shown). The transmission or transfer case would therefore include a splined shaft which is received within the splined bore 36 of adaptor member 34, so that the transmission or transfer case may provide a power transfer to propeller shaft 12.

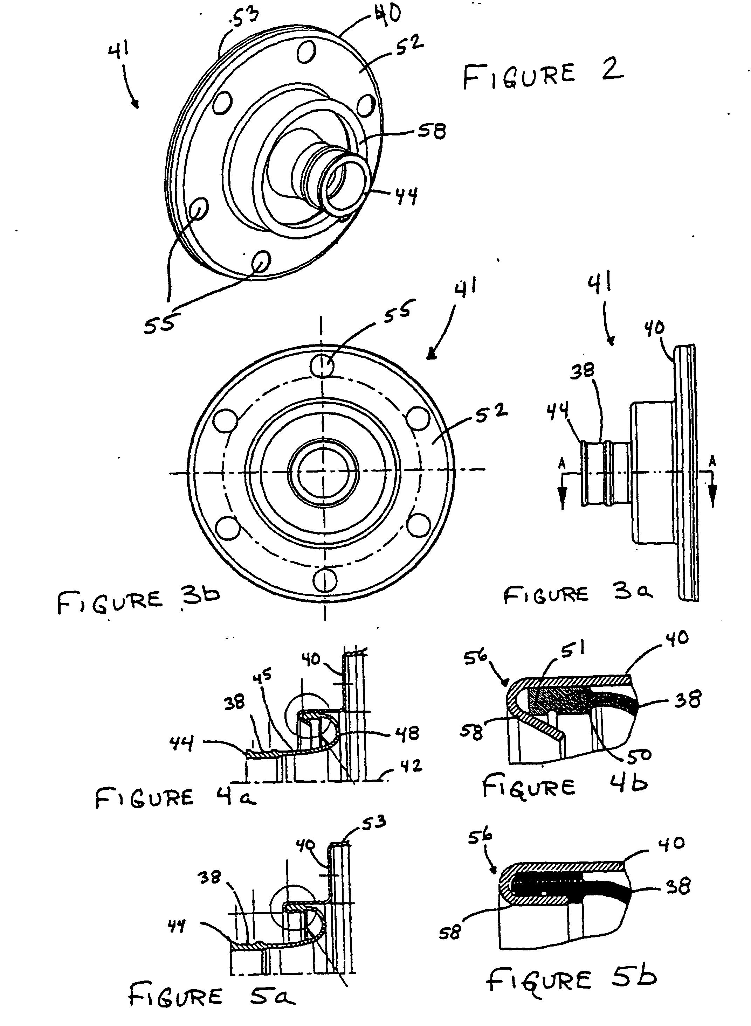

In keeping with the present invention, also included in assembly 10 is a boot 38 and a boot-can 40. As shown in the perspective view of Figure 2 and the elevational views of Figures 3a-3b, 4a-4b and 5a-5b, boot 38 and boot-can 40 may form a subassembly 41. As illustrated in Figure 4a, boot 38 is an annular member having a longitudinal axis 42. Boot 38 has a first annular neck member 44 which engages propeller shaft 12 (and more particularly propeller stub shaft 16) in order to provide a seal between constant velocity universal joint 18 and propeller shaft 12, so that (similar to grease cap 32) grease is not able to exit joint 18 and foreign matter and contaminants such as water are not able to enter joint 18 and impede its operation. With reference to Figure 1, first annular neck member 44 of boot 38 is attached to propeller stub shaft 16 with a fastener such as an annular clamp 46 in order to maintain the seal therebetween. Such sealing and protection of constant velocity universal joint 18 is desired because, once the inner cavity of joint 18 is partially filled with grease and sealed, it is thus lubricated, and preferably lubricated for life with no required maintenance.

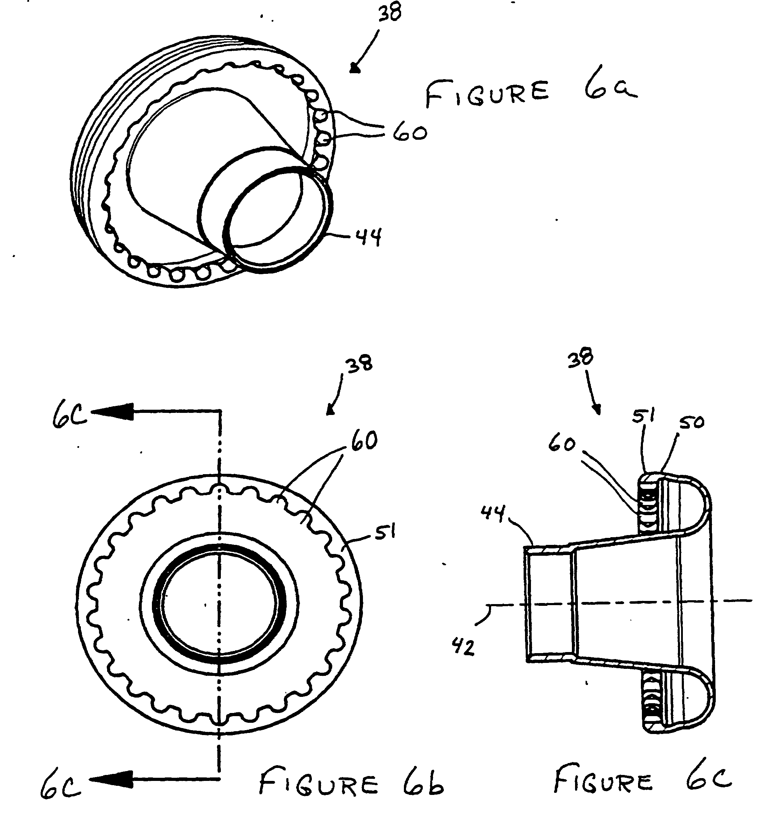

Boot 38 is preferably a non-convoluted rolling diaphragm boot. As shown in the cross-section of Figures 1, 4a and 5a, boot 38 transitions from first annular neck member 44 to a stem portion 45, then transitions from stem portion 45 through an outwardly curved (rolling diaphragm) portion 48, which then transitions to a second annular end 50, having a crimping lip 51. Second annular end 50 has a relatively larger diameter than first annular neck member 44. Stem portion 45 is substantially frustoconical in shape and defines a longitudinal opening 47 therethrough for receiving propeller stub shaft 16 therein. As shown in the enlarged views of Figures 4b and 5b, second annular end 50 includes crimping lip 51 having a greater thickness than the other wall portions of boot 38. The rolling diaphragm shape of boot 38 assists in reducing undue forces from being applied to boot 38 at high angular deflection states.

Boot-can 40 provides a means by which boot 38 may be coupled with constant velocity universal joint 18. Boot-can 40 is a connector which allows the relatively small diameter boot 38 to be mounted to the relatively large diameter outer race 20 of constant velocity universal joint 18 (or the second face 21 thereof). As shown in Figures 1-4b, boot-can 40 includes an outer end 52 with an annular flange 53 which is mounted to the second face 21 of outer race 20 of constant velocity universal joint 18 (or the end of outer race 20 which is disposed opposite the end mated to grease cap 32). Boot-can 40 is preferably formed of a metal.

To assist in the mounting of boot-can 40 to outer race 20 universal joint 18, boot-can 40 has a plurality of holes or openings 55 distributed around its outer end 52, which correspond with bores (not shown) in outer race 20 of constant velocity universal joint 18. Accordingly, boot-can 40 may be mechanically fastened to constant velocity universal joint 18, for example, by using bolts 57 (best shown in Figure 1) to fasten the mating components boot-can 40 and outer race 20. The other end 56 of boot-can 40 has a flange 58 which is inwardly turned toward the center of boot-can 40. In order to assemble subassembly 41, boot 38 and boot-can 40 are oriented (as shown in Figures 1-2, 3a-3b, 4a-4b, 5a-5b) so that the second annular portion 50 (and more particularly crimping lip 51) is received by the inwardly turned flange 58 of boot-can 40 (as shown by the "un-crimped" detail of Figures 4a-4b). Subsequently, inwardly turned flange 58 is crimped in order to secure crimping lip 51 therein, thereby coupling boot 38 and boot-can 40 as shown by the "crimped" detail of Figures 5a-5b.

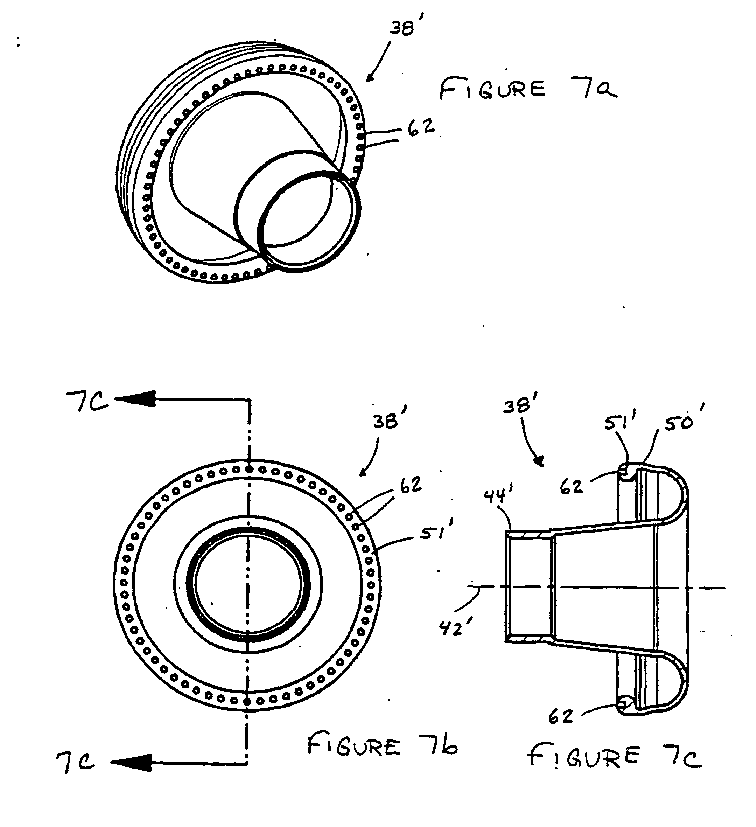

A preferred embodiment according to the present invention is illustrated in Figures 6a-6c. Shown therein is a boot 38 formed of a thermoplastic elastomer material. Thermoplastic properties provide for a more firm or harder boot than rubber or silicone materials typically utilized in such an application, thus providing additional stability and resistance to environmental contaminants to boot 38. As shown in the first embodiment of boot 38 shown in Figures 6a, 6b and 6c, a plurality of cut-outs 60 are formed in crimping lip 51. Each cut-out 60 is equally radially distributed from axis 42 along the circumference of the crimping lip 51. In a more preferred embodiment, each cut-out 60 is spaced apart in a radially distributed pattern around the circumference of crimping lip 51, as shown in Figure 6b. Thus, boot 38 having the cut-out 60 design for crimping lip 51 has improved properties, including greater compressibility, because the material reduction in crimping lip 51 (due to cut-outs 60) reduces the effective stiffness of the thermoplastic material, thereby allowing the crimping lip 51 to have properties similar to an improved radial spring. Accordingly, the integrity of the crimp seal between crimping lip 51 (of boot 38) and flanged edge 58 (of boot-can 40) is improved, and according to the objectives of the present invention, the crimp integrity improved over the vehicle's life, and also has improved performance in cold temperature operation, where thermoplastic is better able to withstand colder temperatures. Thermoplastic material is also sufficiently rigid and substantial to withstand the loss of material in the crimping lip 51 area, due to cut-outs 60.

In the prior art, thermoplastic elastomer (TPE) materials have not been generally considered for rolling diaphragm boots because of their lower compressibility properties. However a boot made of TPE and having the rolling diaphragm form and one of the crimping lip 51 designs according to the present invention has greater compressibility properties due to the material reduction, thereby providing for reduced effective stiffness. In this manner, the integrity of the crimp seal is improved.

A second embodiment of a boot 38 according to the present invention is illustrated in Figure 7, and is designated as boot 38'. Note that in the second embodiment disclosed herein, many of the similar components from previous embodiments are designated by like reference numerals carrying prime (') designations, for consistency and ease of reference. As in the first embodiment of Figures 6a-6c, boot 38' is preferably formed of a thermoplastic material. However, instead of cut-outs 60, an alternative crimping lip 51' design is provided. As shown in Figures 7a,7b and 7c, crimping lip 51' has formed therein a plurality of relatively small apertures 62 which are formed into crimping lip 51'. Apertures 62 are particularly shown as holes in this embodiment having a diameter smaller than the thickness of crimping lip 51', as shown in Figure 7b. As in the previous embodiment, the apertures 62 are equally radially distributed from the longitudinal axis 42' along the circumference of the crimping lip 51'. More preferably the apertures 62 are spaced apart in a radially distributed pattern around crimping lip 51'. As shown in the side elevational cross-sectional view of Figure 7c (taken along line 7c-7c of Figure 7b), each aperture extends partially into crimping lip 51'.

In one embodiment, the size of cut-outs 60 and apertures 62 are between 35% to 70% of crimping lip 51 thickness. Of course, it is contemplated that cut-outs 60 and apertures 62 may have a size and/or shape as is deemed appropriate and necessary in order to achieve the desired crimping properties according to the objects of the present invention. It is further contemplated that the cut-outs 58 and apertures 60 may be molded or otherwise formed into boots 38, 38', respectively.

Thus the compressed crimping lip 51 thickness ratio is approximately 50% to 70%of the uncompressed crimping lip 51 thickness. The use of the cut-outs 60 or apertures 62 may reduce standard crimping force required by up to approximately 50%. In this manner, the modified geometry has reduced effective stiffness, allowing for a greater degree of compression of the boot-can 40 to boot 30. A thermoplastic elastomer rolling diaphragm boot 38, 38'of this type further includes a better seal integrity over operative its lifetime, and particularly during cold temperature operation.

While the invention has been particularly shown and described in reference to the preferred embodiment thereof, it will be understood by those skilled in the art that various changes in form and details may be made therein without departing from the spirit and scope of the invention.

## Claims

1. A boot (38) adapted for coupling to a boot-can (40), the boot (38) comprising:
a cylindrical neck member (44), and
an annular member (50) having a longitudinal axis (42) and a crimping lip (51) for being received by the boot-can (40), **characterised in that** said crimping lip (51) having a plurality of radially distributed apertures which are oriented parallel to said longitudinal axis (42) for reducing the stiffness and increasing the compressibility of said crimping lip (51).

2. The boot of claim 1, wherein the plurality of radially distributed apertures are a plurality of equally circumferentially spaced apart holes (62).

3. The boot of claim 1, wherein the plurality of radially distributed apertures are a plurality of equally circumferentially spaced apart radially distributed cut-outs (60).

4. The boot of claim 1, wherein the annular member (50) is formed of a thermoplastic material.

5. A boot and boot-can assembly (41) adapted for attachment to an outer race (20) of a constant velocity universal joint (18), the boot and boot-can assembly (41) comprising:
a boot-can (40) having a first end (52) for mating with the outer race (20) and a second flanged end (56); and
a boot as defined in one of claims 1 to 4.

6. A constant velocity universal joint assembly comprising:
a boot-can (40) having a first end (52) for mating with said outer race (20) and a second flanged end (56); and
a boot as defined in one of claims 1 to 4.

7. A constant velocity universal joint and propeller shaft assembly (10) comprising:
a propeller shaft (12) having a first end;
a constant velocity universal joint (18) for receiving the first end of the propeller shaft (12) and including an outer race (20) having a first face;
a boot-can (40) having a large-diameter end and a smaller-diameter flanged end, the larger-diameter end for mating with the first face of the outer race (20); and
a boot as defined in one of claims 1 to 4 having a sealing end, a tubular stem portion for receiving the propeller shaft (12), and an annular upturned edge crimpingly affixed to the smaller-diameter flanged end of the boot-can (40), and the sealing end cooperating with the propeller shaft (12) to provide a seal therewith.

## Patentansprüche

1. Schutzmanschette (38), die zum Verbinden mit einem Manschettentopf (40) ausgelegt ist, wobei die Schutzmanschette (38) folgendes umfaßt:
ein zylindrisches Kragenelement (44), sowie
ein ringförmiges Element (50) mit einer Längsachse (42) und einem Krimpansatz (51) zur Aufnahme durch den Manschettentopf (40), **dadurch gekennzeichnet, daß** der genannte Krimpansatz (51) eine Mehrzahl von radial verteilten Öffnungen aufweist, die parallel zur genannten Längsachse (42) ausgerichtet sind, um die Biegesteifigkeit zu verringern und die Kompressibilität des genannten Krimpansatzes (51) zu erhöhen.

2. Schutzmanschette nach Anspruch 1,
wobei die Mehrzahl der radial verteilten Öffnungen eine Mehrzahl von gleichmäßig über den Umfang verteilten und voneinander beabstandeten Löchern (62) ist.

3. Schutzmanschette nach Anspruch 1,
wobei die Mehrzahl der radial verteilten Öffnungen eine Mehrzahl von gleichmäßig über den Umfang verteilten und voneinander beabstandeten radial verteilten Aussparungen (60) ist.

4. Schutzmanschette nach Anspruch 1,
wobei das ringförmige Element (50) aus einem thermoplastischen Werkstoff besteht.

5. Schutzmanschette-und-Manschettentopf-Anordnung (41), die zum Befestigen an das Außenteil (20) eines Gleichlaufdrehgelenks (18) ausgelegt ist, wobei die Schutzmanschette-und-Manschettentopf-Anordnung (41) folgendes umfaßt:
einen Manschettentopf (40) mit einem ersten Ende (52) zur Verbindung mit dem Gelenkaußenteil (20) und einem zweiten flanschförmigen Ende (56); sowie
eine Schutzmanschette, wie sie in einem der Ansprüche 1 bis 4 definiert ist.

6. Gleichlaufdrehgelenkanordnung, umfassend:
einen Manschettentopf (40) mit einem ersten Ende (52) zur Verbindung mit dem Gelenkaußenteil (20) und einem zweiten Flanschende (56); sowie
eine Schutzmanschette, wie sie in einem der Ansprüche 1 bis 4 definiert ist.

7. Gleichlaufdrehgelenk-und-Antriebswellen-Anordnung (10), umfassend:
eine Antriebswelle (12) mit einem ersten Ende;
ein Gleichlaufdrehgelenk (18) zur Aufnahme des ersten Endes der Antriebswelle (12) und umfassend ein Gelenkaußenteil (20) mit einer ersten Fläche;
einen Manschettentopf (40) mit einem Ende mit großem Durchmesser und einem flanschförmigen Ende mit kleinerem Durchmesser, wobei das Ende mit großem Durchmesser zum Verbinden mit der ersten Fläche des Gelenkaußenteils (20) vorgesehen ist; und
eine Schutzmanschette, wie sie in einem der Ansprüche 1 bis 4 definiert ist, die ein Dichtungsende, einen rohrförmigen Schaftabschnitt zur Aufnahme der Antriebswelle (12) sowie einen nach oben gebogenen ringförmigen Rand aufweist, der durch Krimpung an dem flanschförmigen Ende des Manschettentopfes (40) mit kleinerem Durchmesser befestigt ist, wobei das Dichtungsende mit der Antriebswelle (12) zusammenwirkt, um sie abzudichten.

## Revendications

1. Soufflet (38) adapté pour être couplé à une boîte de soufflet (40), le soufflet (38) comportant :
un élément de col cylindrique (44), et
un élément annulaire (50) ayant un axe longitudinal (42) et un rebord de sertissage (51) pour être reçu par la boîte de soufflet (40), **caractérisé en ce que** ledit rebord de sertissage (51) a une pluralité d'ouvertures réparties radialement qui sont orientées parallèlement audit axe longitudinal (42) pour réduire la raideur et augmenter la compressibilité dudit rebord de sertissage (51).

2. Soufflet selon la revendication 1, dans lequel la pluralité d'ouvertures réparties radialement sont une pluralité de trous (62) également espacés sur la circonférence.

3. Soufflet selon la revendication 1, dans lequel la pluralité d'ouvertures réparties radialement sont une pluralité d'encoches (60) réparties radialement et également espacées sur la circonférence.

4. Soufflet selon la revendication 1, dans lequel l'élément annulaire (50) est formé d'un matériau thermoplastique.

5. Ensemble de soufflet et de boîte de soufflet (41) adapté pour être fixé à une cuvette extérieure (20) d'un joint homocinétique (18), l'ensemble de soufflet et de boîte de soufflet (41) comportant :
une boîte de soufflet (40) ayant une première extrémité (52) pour s'emboîter sur la cuvette extérieure (20) et une seconde extrémité à collerette (56) ; et
un soufflet selon l'une des revendications 1 à 4.

6. Ensemble de joint homocinétique comportant :
une boîte de soufflet (40) ayant une première extrémité (52) pour s'emboîter sur ladite cuvette extérieure (20) et une seconde extrémité à collerette (56) ; et
un soufflet selon l'une des revendications 1 à 4.

7. Ensemble de joint homocinétique et d'arbre de transmission (10) comportant :
un arbre de transmission (12) ayant une première extrémité ;
un joint homocinétique (18) pour recevoir la première extrémité de l'arbre de transmission (12) et comportant une cuvette extérieure (20) ayant une première face ;
une boîte de soufflet (40) ayant une extrémité à grand diamètre et une extrémité à collerette à diamètre plus petit, l'extrémité à plus grand diamètre étant destinée à s'emboîter sur la première face de la cuvette extérieure (20) ; et
un soufflet selon l'une des revendications 1 à 4 ayant une extrémité d'obturation, une partie de tige tubulaire pour recevoir l'arbre de transmission (12), et un bord annulaire retourné fixé par sertissage à l'extrémité à collerette de plus petit diamètre de la boîte de soufflet (40), et l'extrémité d'obturation coopérant avec l'arbre de transmission (12) pour former une obturation avec lui.
